# FASCICULE DE BREVET EUROPEEN

(11) **EP 3 322 777 B1**
(45) Date de publication et mention de la délivrance du brevet: **06.05.2020**
(21) Numéro de dépôt: 16757277.5
(22) Date de dépôt: 12.07.2016
(51) Int. Cl.: C10L 3/08, C10L 3/10, C25B 1/00

(54) **DISPOSITIF ET PROCÉDÉ DE PRODUCTION DE GAZ DE SYNTHÈSE**
VORRICHTUNG UND VERFAHREN ZUR HERSTELLUNG VON SYNTHESEGAS
DEVICE AND METHOD FOR PRODUCING SYNTHETIC GAS

(30) Priorité: 16.07.2015 FR 1556743; 21.01.2016 FR 1650497
(43) Date de publication de la demande: 23.05.2018
(73) Titulaire: ENGIE, 92400 Courbevoie (FR)
(72) Inventeur: KARA, Yilmaz, 95600 Eaubonne (FR); FORTIN, Stéphane, 59850 Nieppe (FR); RICARD, Julia, 94230 Cachan (FR)
(74) Mandataire: Cornuejols, Georges
(86) Numéro de dépôt international: PCT/FR2016/051793
(87) Numéro de publication internationale: WO 2017/009577

(56) Documents cités:
- EP-A1- 2 110 425
- WO-A1-2015/011503
- WO-A1-2015/063411
- WO-A1-2015/082130
- FR-A1- 2 467 834
- US-A- 3 967 936
- US-A1- 2009 247 653
- US-A1- 2013 317 126

## Description

### DOMAINE TECHNIQUE DE L'INVENTION

La présente invention vise un dispositif et un procédé de production de gaz de synthèse. Elle s'applique, notamment, à la filière de production de gaz naturel de synthèse ou « SNG » (de l'anglais Synthesis Natural Gas, traduit par gaz naturel de synthèse)

### ÉTAT DE LA TECHNIQUE

La production de biométhane, un « SNG » (de Synthesis Natural Gas, traduit par Gaz Naturel de Synthèse) peut être réalisée par la mise en oeuvre de procédés Power-to-SNG (traduit par « Energie-vers-SNG »), abréviés « P2G », qui visent à convertir de l'eau, du CO₂ et de l'énergie électrique en un gaz combustible de qualité semblable à celle du biométhane et du gaz naturel.

Pour dégager une rentabilité économique satisfaisante, le P2G est basé sur une utilisation de l'énergie électrique d'origine renouvelable durant les périodes de surproduction de cette énergie. Ainsi, la technologie de méthanation requiert une grande souplesse opérationnelle en termes de puissance, ou débit et de traitement.

Au sein de cette filière, plusieurs options technologiques existent.

La première option consiste à directement co-électrolyser de l'eau, sous forme vapeur, et du CO₂ d'origine anthropique pour produire du CO et du H₂. Cette conversion se fait généralement à haute température et le gaz produit est un syngas dont les caractéristiques compositionnelles sont proches de celles de la gazéification de biomasse (CO, H₂, CO₂ et H₂O). La différence principale relève d'une meilleure maîtrise du ratio H₂/CO sans étape de réaction du gaz à l'eau, abréviée « WGS » (pour Water Gas Shift, traduit par Réaction du Gaz à l'Eau), dite « réaction de Dussan ». Cette réaction de WGS a pour formule :

CO + H₂O ⇔ H₂ + CO₂

La seconde option consiste à convertir l'eau par électrolyse, alcaline ou à membrane à électrolyte polymère, pour produire du H₂ à la cathode et de l'O₂ à l'anode. Le H₂ ainsi produit est ensuite mélangé à du CO₂ pour former du syngas à l'origine du gaz naturel de synthèse.

La production du biométhane à partir du syngas est basée sur la réaction catalytique de méthanation (ou d'hydrogénation) du CO ou du CO₂ dite « réaction de Sabatier ». La méthanation consiste à convertir le monoxyde ou le dioxyde de carbone en présence d'hydrogène et d'un catalyseur, généralement à base de nickel ou d'un autre métal de transition plus ou moins noble, pour produire du méthane. Elle est régie par les réactions équilibrées compétitives d'hydrogénation suivantes :

*CO + 3H₂* ⇔ *CH₄ + H₂O **Δ**H_{298K} = -206 kJ*/*mol*

*CO₂ + 4H₂* ⇔ *CH₄ + 2H₂O **Δ**H_{298K} =* -*27 kcal*/*mol*

La première option met en œuvre, pour produire du SNG à partir du syngas, une réaction de méthanation du CO et du CO₂ résiduel tandis que la deuxième option met en oeuvre une réaction de méthanation du CO₂.

La réaction de méthanation est une réaction exothermique avec diminution du nombre de moles ; conformément au principe de Le Chatelier, la réaction est favorisée par l'augmentation de la pression et défavorisée par l'augmentation de la température.

Ces réactions équilibrées fortement exothermiques requièrent une bonne maîtrise du refroidissement du réacteur dans lequel elles ont lieu.

La chaleur dégagée lors de la conversion du CO est d'environ 2,7 kWh lors de la production de 1 Nm³ de méthane. Le contrôle de la température au sein du réacteur, et donc l'élimination de la chaleur produite par la réaction, est un des points clés pour minimiser la désactivation du catalyseur, par frittage, et maximiser les taux de conversion en méthane.

La valorisation de la chaleur produite lors de la méthanation, soit au sein de l'unité proprement dite soit par vente de chaleur, constitue un des points clés de l'équilibre technico économique du procédé de production de SNG. La production de vapeur est un moyen classique pour obtenir cette valorisation.

Les réactions de méthanation dont les cinétiques sont rapides aux températures mises en œuvre, se caractérisent par une très forte exothermicité.

Pour maximiser la production de CH₄ par hydrogénation du monoxyde de carbone, il convient que H₂ et CO soient dans un rapport stœchiométrique autour de 3 pour 1. Même en respectant ce ratio, la réaction reste incomplète du fait des équilibres chimiques.

Parmi les technologies de réacteur de méthanation, certaines mettent en oeuvre un réacteur en lit fluidisé dense, le lit étant formé par le catalyseur de la réaction de méthanation. L'élimination de la chaleur produite par la réaction est alors réalisée par des échangeurs immergés dans le lit fluidisé. Cependant, en raison de la très forte exothermicité de la réaction, les quantités de chaleurs à évacuer, et donc les surfaces d'échange requises, sont importantes. Ainsi, le volume occupé par cet échangeur conduit à un surdimensionnement global de la taille du réacteur et surtout à une complexification de sa conception.

La mise en œuvre d'un réacteur fluidisé est une solution simple pour limiter la température de réaction. La fluidisation du catalyseur par le mélange réactionnel permet une homogénéisation quasi-parfaite des températures en tous points de la couche catalytique et le réacteur peut être assimilé à un réacteur isotherme. L'élimination de la chaleur produite par la réaction s'effectue par l'intermédiaire d'échangeurs immergés au sein de la couche fluidisée. Les coefficients d'échanges thermiques entre la couche fluidisée et une paroi plongée dans le lit sont très importants (de l'ordre de 400 à 600 watt par Kelvin et par mètre carré, noté W/K.m², comparables à ceux entre un liquide et une paroi) et permettent de minimiser les dimensions de l'échangeur et donc la taille globale du réacteur.

Dans la gamme de température mise en oeuvre dans les réacteurs de méthanation en lit fluidisé, la cinétique de la réaction de méthanation est très rapide, et, par conséquent, la quantité de catalyseur requise du seul fait de la réaction chimique est faible. Aussi la taille du réacteur et la quantité de catalyseur utilisée résultent de l'encombrement de l'échangeur implanté au sein du lit fluidisé et de la surface de transfert requise.

À des températures inférieures à 230°C, le nickel, constituant du catalyseur ou présent dans le matériau constituant les parois du réacteur, est susceptible de réagir avec le monoxyde de carbone pour former du Tétra-carbonyle de nickel (Ni(CO)₄), composé très fortement toxique. C'est pourquoi il est indispensable que toutes les parties du réacteur en contact avec du CO soient toujours à une température supérieure à 150°C et préférentiellement supérieure à 230°C.

Du fait de l'échange thermique et du régime de fluidisation, un inconvénient majeur est imputable à cette technologie pour un fonctionnement à haute pression. En effet, la baisse du volume gazeux due à l'augmentation de pression conduit à une section disponible moins importante pour positionner l'échangeur (à puissance égale). Des solutions de l'homme du métier existent cependant pour pallier l'ajustement de la surface effective ou au régime de fluidisation. Les solutions non-exhaustives sont par exemples :
- la diminution du nombre de tubes et par conséquent l'augmentation de la hauteur de couche de catalyseur avec une limite haute liée au phénomène de « slugging » (traduit par pistonnage) avec des propriétés d'échange thermique réduites, le slugging correspond au déplacement de solide par paquet avec, entre deux paquets, une poche gazeuse qui encombre toute la section d'un réacteur, ce qui a pour effet l'obtention d'une alternance entre paquets solides et gazeuse en lieu d'un mélange de gaz et de solides tels qu'attendus et
- la modification des caractéristiques physiques du catalyseur (granulométrie, densité du support) pour conserver une fluidisation équivalente pour un débit volumique plus faible.

Pour l'optimisation de la souplesse opérationnelle, le lit fluidisé permet par nature une flexibilité plus large en terme de débit et donc de puissance de réacteur autour des conditions de dimensionnement.

Les solutions actuellement proposées pour cette famille technologique ne se distinguent pas entres-elles vraiment sur l'efficacité de conversion mais principalement sur la méthodologie mise en oeuvre pour refroidir le réacteur.

Le schéma global de principe pour les systèmes actuels de P2G comporte ainsi les étapes suivantes :
- une co-électrolyse de l'eau vapeur et du CO₂,
- une méthanation du CO par l'hydrogène coproduit en co-électrolyse et
- une mise aux spécifications pour séparer le H₂O et H₂/CO₂ résiduels.

L'étape de mise aux spécifications a pour fonction de séparer les constituants du gaz issu de la méthanation afin d'obtenir un méthane de synthèse répondant aux spécifications d'injection sur le réseau de gaz naturel. Ainsi, cette séparation génère des sous-produits que sont H₂O, CO₂ et H₂. Elles sont le plus souvent réalisées dans des équipements séparés avec des conditions opératoires parfois très différentes.

Avant le conditionnement et l'injection du SNG produit, il convient d'éliminer une fraction importante du H₂ résiduel de la réaction de méthanation afin de répondre aux spécifications. La technique la plus communément utilisée pour cette séparation est la perméation membranaire qui peut présenter un niveau de complexité et des coûts, en termes d'investissement et d'opération, non négligeables avec un impact significatif sur la chaîne de valeur.

La composition du SNG brut en sortie de réacteur est intimement liée aux conditions de fonctionnement du réacteur, en termes de pression, de température, du mode de fonctionnement adiabatique ou isotherme du réacteur, ces conditions gouvernant les équilibres chimiques des réactions de méthanation. Ces réactions forment globalement de l'eau et une séparation de cette espèce est par conséquent requise. Concernant les autres espèces (CO, CO₂ et H₂), leurs teneurs respectives peuvent être modifiées en jouant d'une part sur le mode de fonctionnement du réacteur (adiabatique ou isotherme) et d'autre part sur la température ou la pression. Une pression élevée et une faible température permettent ainsi de réduire considérablement les teneurs de ces composés. Lorsque l'opération est réalisée en réacteur « adiabatique », une succession d'étapes est par ailleurs nécessaire pour atteindre une qualité de conversion équivalente au réacteur isotherme. En tout état de cause, la composition du gaz produit est généralement incompatible avec les spécifications d'injection ou d'utilisation du gaz naturel et des étapes d'amélioration sont nécessaires pour éliminer le CO₂ et/ou le H₂ résiduel. Ainsi, le mode opératoire constitue un verrou pour la simplification de la chaîne des procédés.

On connaît des solutions telles que décrites dans le document US 2013/0317126. Dans ces systèmes, un réacteur de méthanation adiabatique est mis en oeuvre et une partie des produits de méthanation est recirculée en entrée dudit réacteur.

Cette recirculation de produits de méthanation vise, d'après ce document, à ajuster la température des réactifs entrant dans le réacteur de méthanation adiabatique en vue de modérer l'exothermicité de la réaction adiabatique se produisant dans le réacteur.

Dans ces solutions, la température atteinte en entrée du réacteur de méthanation est de l'ordre de 310 à 330°C et la température en sortie de ce réacteur est de l'ordre de 620°C, ce qui induit une conversion peu efficace limitée par la thermodynamique de la réaction et donc la présence de composés indésirables, comme par exemple H₂, CO, CO₂ en excès, dans le flux sorti du réacteur. Cette présence de composés indésirables, notamment du dihydrogène, nécessite une étape de séparation du dihydrogène en aval du réacteur pour répondre par exemple aux spécifications d'injection sur le réseau de distribution ou de transport de gaz naturel.

Le flux est dit aux spécifications d'injection quand celui-ci présente des critères de :
- Pouvoir Calorifique Supérieur, dit « PCS »,
- indice de Wobbe et
- teneur en dihydrogène
compris dans des plages de valeur prédéterminées correspondant aux particularités du réseau de distribution ou de transport du gaz naturel.

On connaît également des solutions telles que décrites dans le document US 3 967 936. Dans ces systèmes, une succession de réacteurs de méthanation adiabatiques est mise en oeuvre et une partie des produits de méthanation est recirculée en entrée de chaque réacteur de la succession.

Cette recirculation de produits de méthanation vise, d'après ce document, à ajuster la température des réactifs entrant dans le réacteur de méthanation adiabatique en vue de modérer l'exothermicité de la réaction adiabatique se produisant dans le réacteur.

De la même manière, ces solutions nécessitent la séparation, en aval du réacteur, de composés indésirables, tels du dihydrogène pour répondre par exemple aux spécifications d'injection sur le réseau de distribution ou de transport du gaz naturel.

On connaît enfin des systèmes tels que décrits dans le document US 2009/0247653. Dans ces systèmes, une succession de trois réacteurs de méthanation adiabatiques est mise en oeuvre, le dernier réacteur de la succession visant produire du méthane de synthèse complémentaire. Dans ces systèmes, une partie des produits de la méthanation du CO et du H₂ est recirculée après le deuxième réacteur vers le flux d' entrée du premier réacteur de la succession pour ajuster le ratio de CO et de H₂ et ajuster la température du flux d'entrée du premier réacteur pour modérer l'exothermicité de la réaction adiabatique se produisant dans le réacteur dans le premier réacteur. Le document WO 2015/011503 A1 décrit un dispositif et procédé comprenant un réacteur isotherme de méthanation relié à une conduite d'alimentation de syngas produit par gazéification, la sortie du réacteur étant reliée à un moyen de séparation d'eau, suivi par une séparation de CO2 par adsorption modulée en pression, avant d'envoyer ce gaz naturel de synthèse produit à être injecté dans un réseau gazier.

Ces solutions nécessitent toutefois également la séparation, en aval du réacteur, de composés indésirables, tels du dihydrogène.

Les réacteurs adiabatiques, s'ils ne supposent pas de refroidissement interne au réacteur de méthanation, présentent plusieurs désavantages :
- une pluralité de réacteurs en succession est nécessaire pour obtenir un rendement satisfaisant de méthanation et
- dans le cas de la méthanation du CO, une préparation spécifique du gaz de synthèse, par ajout d'une étape catalytique dite du gaz à l'eau est nécessaire pour obtenir une stœchiométrie satisfaisante.

En contrepartie, la conception des réacteurs adiabatiques est plus simple car ils sont essentiellement constitués d'une enceinte devant résister à des pressions généralement élevées (>30 bar) pour atteindre une conversion satisfaisante.

Dans le cas de la méthanation en réacteur isotherme, la pression opératoire n'a pas besoin d'être aussi importante (<20 bar) mais nécessite la disposition de surfaces immergées au sein de la couche catalytique ce qui génère une complexité de conception et un surcoût lié au système de refroidissement.

En conclusion, les techniques actuelles de l'état de l'art ne permettent pas une maîtrise satisfaisante de l'exothermicité de la réaction de méthanation et ne donnent pas au dispositif une souplesse satisfaisante aux fluctuations de puissance directement liées à la surproduction électrique. De plus, ces techniques actuelles nécessitent une séparation systématique de H₂ et/ou de CO₂, lorsque la pression opératoire est inférieure à 40 bars, pour répondre aux spécifications d'injection ou d'utilisation en substitution du gaz naturel du réseau.

Ainsi, les systèmes actuels ne permettent pas la mise aux spécifications d'injection sur un réseau de distribution ou de transport de gaz naturel sans qu'une étape de séparation du dihydrogène, en aval de la réaction de méthanation, ait lieu.

### OBJET DE L'INVENTION

La présente invention vise à remédier à tout ou partie de ces inconvénients.

À cet effet, selon un premier aspect, la présente invention vise un dispositif de production de gaz naturel de synthèse, selon la revendication 1.

Le moyen de séparation d'eau refroidissant le gaz naturel de synthèse, la fourniture d'une partie de ce gaz naturel de synthèse en entrée du réacteur permettent un refroidissement du syngas dans le mélange d'entrée, et permettent au réacteur de ne pas nécessiter d'échangeur thermique. La conception d'un tel réacteur, notamment en termes de dimensionnement, est d'autant plus simplifiée. De plus, la fourniture du gaz naturel de synthèse déshydraté dans la conduite d'alimentation améliore l'indice de Wobbe et le PCS des produits de la réaction de méthanation par la modification favorable des équilibres réactionnels. Ainsi, le dispositif objet de la présente invention permet un dimensionnement simplifié du réacteur ainsi que la simplification de la mise aux spécifications nécessitant une séparation du dioxyde de carbone avant conditionnement pour injection dans un réseau gazier.

De plus, la mise en oeuvre d'un réacteur isotherme permet la réalisation d'une étape unique de méthanation pour obtenir une conversion efficace en gaz naturel de synthèse et obtenir un gaz de qualité proche des spécifications d'injection sur le réseau de distribution ou de transport du gaz naturel.

Dans des modes de réalisation, le dispositif objet de la présente invention comporte un moyen de séparation de dioxyde de carbone du gaz naturel de synthèse, ce moyen de séparation étant positionné en aval de la dérivation.

Ces modes de réalisation améliorent la mise aux spécifications des produits de la réaction de méthanation.

Dans des modes de réalisation, le dispositif objet de la présente invention comporte un moyen de séparation de dioxyde de carbone du gaz naturel de synthèse, ce moyen de séparation étant positionné en amont de la dérivation.

Ces modes de réalisation améliorent davantage la simplification de la mise aux spécifications des produits de la réaction de méthanation.

Dans des modes de réalisation, le dispositif objet de la présente invention comporte en amont de la conduite d'alimentation de syngas, un moyen de co-électrolyse à haute température d'un mélange de dioxyde de carbone et d'eau.

Dans des modes de réalisation, le dispositif objet de la présente invention comporte :
- un moyen d'injection d'un gaz de balayage pour balayer une anode du moyen de co-électrolyse et
- un moyen de séparation d'eau de produits de la co-électrolyse,
- un moyen de récupération de dioxygène ou d'air enrichi en dioxygène en sortie du moyen de séparation.

Ces modes de réalisation permettent à la vapeur injectée de réaliser une contre-pression par rapport à la pression opératoire cathodique du moyen de co-électrolyse.

Dans des modes de réalisation, le dispositif objet de la présente invention comporte un moyen de compression, du dioxyde de carbone destiné à être mélangé à l'eau.

Ces modes de réalisation permettent d'améliorer le fonctionnement du moyen de co-électrolyse mis en oeuvre.

Dans des modes de réalisation, le dispositif objet de la présente invention comporte en amont de l'entrée du réacteur, un moyen de refroidissement du mélange à une température supérieure à la température de rosée du mélange pour éviter toute pré-condensation de l'eau du mélange et inférieure à la température opératoire du réacteur pour permettre le refroidissement du réacteur.

Ces modes de réalisation permettent de mettre le syngas en conformité avec les températures de fonctionnement du réacteur de méthanation.

Dans des modes de réalisation, le moyen de refroidissement du mélange refroidit ce mélange à une température comprise entre 150°C et 300°C.

Dans des modes de réalisation, le moyen de refroidissement du mélange refroidit ce mélange à une température supérieure à 230°C et inférieure à la température de fonctionnement du réacteur.

Dans des modes de réalisation, le dispositif objet de la présente invention comporte :
- un capteur d'une température à l'intérieur ou en sortie du réacteur et
- un recirculateur, du gaz naturel entré dans la dérivation, commandé en fonction d'une valeur de la température captée.

Ces modes de réalisation permettent de réguler le débit de produits de réaction recirculés en fonction de la température captée. Si la température captée est supérieure à une température prédéterminée, correspondant à des conditions de réaction de méthanation optimales, le débit de produits recirculés est augmenté pour refroidir le milieu réactionnel du réacteur. Inversement, si la température captée est inférieure à la température prédéterminée, le débit de produits recirculés est diminué.

Dans des modes de réalisation, le dispositif objet de la présente invention comporte une conduite de déviation, d'une partie des produits chauds de réactions de méthanation, comportant :
- une entrée positionnée entre la sortie du réacteur et le moyen de séparation d'eau et
- une sortie positionnée en amont de l'entrée du réacteur et en aval du moyen de refroidissement.

Ces modes de réalisation permettent de réguler le débit entrant dans le réacteur de manière à conférer au dispositif une grande flexibilité, quelle que soit la quantité d'énergie électrique produite en amont.

Dans des modes de réalisation, le dispositif objet de la présente invention comporte :
- un moyen de mesure du débit du syngas en aval du lieu du mélange et en amont du réacteur de méthanation et
- un recirculateur, de produits chauds de réactions de méthanation entrés dans la conduite de dérivation, commandé en fonction du débit de syngas mesuré.

Ces modes de réalisation permettent de réguler le débit entrant dans le réacteur en fonction du débit de syngas mesuré.

Dans des modes de réalisation, le moyen de séparation d'eau est configuré pour refroidir les gaz naturels de synthèse à une température comprise entre -5°C et +60°C.

Dans des modes de réalisation, le moyen de séparation d'eau est configuré pour refroidir les gaz naturels de synthèse à une température inférieure à la température de rosée aux conditions de fonctionnement du réacteur.

Ces modes de réalisation permettent la séparation de la quasi-totalité de l'eau contenue dans le SNG en sortie du réacteur de méthanation.

Dans des modes de réalisation, le réacteur isotherme est un réacteur à lit fluidisé.

Dans des modes de réalisation, le dispositif objet de la présente invention comporte au moins une surface d'échange thermique positionnée dans le lit fluidisé.

Ces modes de réalisation permettent de réguler la température à l'intérieur du réacteur de méthanation.

Ces modes de réalisation permettent d'homogénéiser simplement la température dans la couche catalytique du réacteur isotherme.

Selon un deuxième aspect, la présente invention vise un procédé de production de gaz naturel de synthèse, selon la revendication 15.

Le procédé objet de la présente invention correspondant au dispositif objet de la présente invention, les buts, avantages et caractéristiques particulières de ce procédé sont identiques à ceux du dispositif objet de la présente invention. Ces buts, avantages et caractéristiques ne sont pas rappelés ici.

Dans des modes de réalisation, le procédé objet de la présente invention comporte une étape de séparation du dioxyde de carbone du gaz naturel de synthèse déshydraté en sortie de l'étape de séparation de l'eau.

Dans des modes de réalisation, le procédé objet de la présente invention comporte une étape de déviation d'une partie des produits chauds de réactions de méthanation vers l'amont de l'étape de méthanation.

### BRÈVE DESCRIPTION DES FIGURES

D'autres avantages, buts et caractéristiques particulières de l'invention ressortiront de la description non limitative qui suit d'au moins un mode de réalisation particulier du dispositif et du procédé de production de gaz naturel de synthèse objets de la présente invention, en regard des dessins annexés, dans lesquels :
- la figure 1 représente, schématiquement, un premier mode de réalisation particulier du dispositif objet de la présente invention,
- la figure 2 représente, schématiquement, un deuxième mode de réalisation particulier du dispositif objet de la présente invention,
- la figure 3 représente, schématiquement et sous forme d'un logigramme, une succession d'étapes particulières du procédé objet de la présente invention,
- la figure 4 représente, sous forme d'une courbe, l'indice de Wobbe de gaz de synthèse obtenu par le premier et le deuxième mode de réalisation du dispositif et le procédé objets de la présente invention,
- la figure 5 représente, sous forme d'une courbe, le PCS de gaz de synthèse obtenu par le premier et le deuxième mode de réalisation du dispositif et le procédé objets de la présente invention,
- la figure 6 représente, sous forme d'une courbe, la baisse relative du flux molaire de dihydrogène à l'intérieur du réacteur lors de la mise en oeuvre du premier et du deuxième mode de réalisation du dispositif par rapport à un dispositif comparable sans recirculation,
- la figure 7 représente, sous forme d'une courbe, l'exothermicité de la réaction de méthanation lors de la mise en oeuvre du premier et du deuxième mode de réalisation du dispositif et du procédé objets de la présente invention et
- la figure 8 représente, schématiquement, un exemple de système mis en oeuvre dans l'état de l'art.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

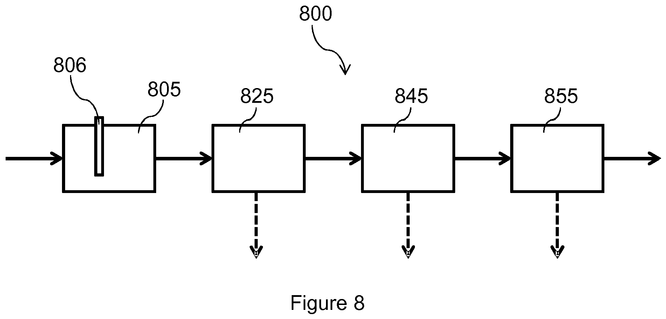

On observe, sur la figure 8, une vue schématique d'un exemple de système 80 mis en oeuvre dans l'état de l'art.

Dans ces systèmes 80, des réactifs de méthanation entrent dans un réacteur 805 de méthanation qui peut faire partie d'une série (non représentée) de tels réacteurs.

En sortie de l'étape de méthanation, l'eau est séparée des produits de méthanation via un moyen de séparation 825 de cette eau, telle un échangeur thermique par exemple.

Le gaz naturel de synthèse déshydraté est ensuite traité par un moyen de séparation 845 du dioxyde de carbone.

Enfin, le gaz naturel de synthèse est traité par un moyen de séparation 855 du dihydrogène pour que ce gaz naturel de synthèse soit aux spécifications d'injection sur un réseau de distribution.

Les étapes de séparation d'eau, de dioxyde de carbone et de dihydrogène peuvent être réalisées dans n'importe quel ordre.

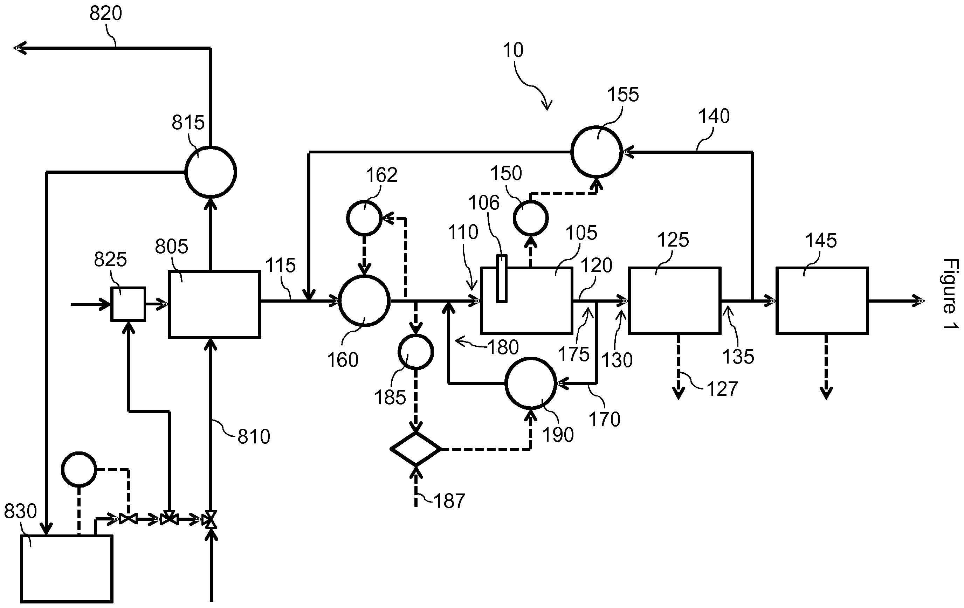

On observe, sur la figure 1, qui n'est pas à l'échelle, une vue schématique d'un premier mode de réalisation du dispositif 10 objet de la présente invention. Ce dispositif 10 de production de gaz naturel de synthèse, comporte :
- un moyen 805 de co-électrolyse à haute température d'un mélange de dioxyde de carbone et de l'eau pour produire un syngas comportant du monoxyde de carbone, du dioxyde de carbone, de l'eau et du dihydrogène,
- un réacteur 105 isotherme de méthanation comportant :
   - une entrée 110 pour le syngas produit par le moyen de co-électrolyse, reliée à une conduite 115 d'alimentation de syngas et
   - une sortie 120 pour gaz naturel de synthèse,
- un moyen 125 de séparation d'eau comportant :
   - une entrée 130 pour gaz naturel de synthèse,
   - une sortie 135 pour gaz naturel de synthèse déshydraté et
- une sortie 127 pour l'eau séparée du gaz naturel de synthèse et une dérivation 140 d'une partie du gaz naturel de synthèse déshydraté depuis la sortie du moyen de séparation d'eau vers la conduite 115 d'alimentation de syngas pour qu'un mélange, du syngas et du gaz naturel de synthèse dérivés, soit fourni au réacteur.

L'eau, H₂O et le CO₂ sont co-électrolysés à haute température, de l'ordre de 750 à 850°C, pour produire du syngas comportant du CO, CO₂, H₂O et du H₂ qui aboutit, par réaction catalytique, à des hydrocarbures dans le réacteur 105. Ce système utilise à la fois de l'énergie électrique et de la chaleur pour électrolyser les molécules de CO₂ et de H2O.

Le réacteur 105 est, préférentiellement, un réacteur isotherme de méthanation à lit fluidisé fonctionnant à une température prédéterminée. La fluidisation du catalyseur par le mélange réactionnel permet une homogénéisation quasi-parfaite des températures en tous points de la couche catalytique et le réacteur peut être assimilé à un réacteur isotherme. Dans des variantes, ce réacteur 105 peut être un réacteur à eau bouillante, connu de l'homme du métier sous l'abréviation « BWR » (pour Boiling Water Reactor). Dans d'autres variantes, ce réacteur 105 peut être un réacteur à lit refroidit par les parois ou un réacteur échangeur.

Dans des modes de réalisation, le réacteur 105 comporte au moins une surface 106 d'échange thermique positionnée dans le lit fluidisé du réacteur 105 isotherme.

Cette surface 106 est, par exemple, un tube configuré pour former une boucle de circulation d'un fluide depuis l'extérieur du réacteur 105 vers l'intérieur de ce réacteur 105, le fluide étant refroidit à l'extérieur du réacteur 105.

Ce fluide est, par exemple, de la vapeur d'eau saturée ou surchauffée.

Ce réacteur 105 est configuré pour réaliser la méthanation du monoxyde de carbone et/ou du dioxyde de carbone.

Ce réacteur 105 comporte l'entrée 110 pour syngas qui est, par exemple, un orifice du réacteur 105 muni d'une connectique (non représentée) compatible avec la conduite d'alimentation 115 de syngas.

Les gaz naturels de synthèse quittent le réacteur 105 par la sortie 120 du réacteur. Cette sortie 120 est, par exemple, un orifice relié à une connectique (non représentée) permettant la fixation d'une conduite étanche de transport du gaz naturel de synthèse.

Le moyen de séparation 125 d'eau est, par exemple, un échangeur thermique pour refroidir les gaz naturels de synthèse à une température inférieure à la température de rosée de l'eau. Cette température est de préférence comprise entre -5°C et +60°C. Préférentiellement, cette température est comprise entre 5°C et 40°C. Préférentiellement, cette température est inférieure à la température de rosée de l'eau aux conditions d'exploitation de la présente invention pour éviter toute pré-condensation de l'eau du mélange et inférieure à la température opératoire du réacteur pour permettre le refroidissement du réacteur 105.

L'eau ainsi séparée est collectée par une sortie 127 pour eau et peut être injectée dans le moyen de production 830 de vapeur ou utilisée par un dispositif externe ou chauffée pour être transformée en vapeur d'eau pouvant, comme indiqué ci-dessous, être injectée dans le moyen de compression 825.

Le moyen de séparation 125 d'eau comporte l'entrée 130 pour gaz naturel de synthèse. Cette entrée 130 est, par exemple, un orifice associé à une connectique (non représentée) pour être relié à la conduite étanche de transport du gaz naturel de synthèse issu du réacteur 105.

Le moyen de séparation 125 d'eau comporte la sortie 135 pour gaz naturel de synthèse déshydraté. Cette sortie 135 est, par exemple, un orifice associé à une connectique (non représentée) pour être reliée à une conduite (non représentée) étanche de transport du gaz naturel de synthèse déshydraté.

La dérivation 140 est, par exemple, une conduite étanche reliée à la conduite de transport du gaz naturel de synthèse déshydraté pour capter une partie du flux traversant cette conduite de transport.

Cette dérivation 140 injecte les gaz naturels de synthèse déshydraté dans la conduite d'alimentation 115 de syngas.

De cette manière, le syngas et le gaz naturel de synthèse déshydraté, refroidis par le processus de séparation de l'eau, forment un mélange qui, dans le réacteur 105, réduit l'exothermicité de la réaction de méthanation, et améliore par ailleurs les spécifications du gaz naturel de synthèse issu du réacteur 105.

En particulier, le mélange réalisé permet d'éviter la séparation avale de H₂ dans le SNG.

La conduite d'alimentation 115 est étanche et reçoit, par exemple, du CO, CO₂, H₂O et du H₂ issu d'un moyen de co-électrolyse d'eau et de dioxyde de carbone.

Dans des modes de réalisation préférentiels, tels que celui représenté en figure 1, le dispositif 10 comporte
- un moyen 810 d'injection d'un gaz de balayage, tel de la vapeur d'eau ou un mélange d'air et de vapeur d'eau, pour balayer une anode du moyen 805 de co-électrolyse,
- un moyen 815 de séparation d'eau de produits de la co-électrolyse,
- un moyen 820 de récupération de dioxygène ou d'air enrichi en dioxygène en sortie du moyen 815 de séparation.

Le moyen d'injection 810 est, par exemple, une conduite associée à une vanne d'injection permettant le balayage d'une anode du moyen 805 de co-électrolyse.

Cette conduite d'injection est alimentée en eau depuis un moyen 830 de production de vapeur d'eau.

Le dioxygène produit au cours de la co-électrolyse est évacué du moyen 805 de co-électrolyse par une conduite différente de la conduite connectée à la conduite d'alimentation 115. Cette conduite d'évacuation du dioxygène traverse le moyen de séparation d'eau 815 de produits de la co-électrolyse. Ce moyen de séparation d'eau est, par exemple, un échangeur thermique pour refroidir le dioxygène et l'eau ou l'air enrichi et l'eau à une température inférieure au point de rosée de l'eau. L'eau ainsi séparée est dirigée vers le réservoir qui fournit l'eau au moyen d'injection 810 de vapeur.

Le moyen de récupération 820 de dioxygène ou d'air enrichi est, par exemple, une conduite associée au moyen 830 de production de vapeur d'eau.

Dans des modes de réalisation préférentiels, tels que celui représenté en figure 1, le dispositif 10 comporte un moyen 825 de compression, du dioxyde de carbone destiné à être mélangé à l'eau. Ce moyen de compression peut être de tout type connu de l'Homme du Métier.

Préférentiellement, le moyen de compression 825 est, par exemple, un éjecteur mettant de la vapeur en oeuvre en tant que fluide vecteur. Cette vapeur provient, par exemple, de la conduite d'injection de vapeur qui constitue le moyen d'injection 810 de vapeur.

Dans des modes de réalisation préférentiels, tels que celui représenté en figure 1, le dispositif 10 comporte, en amont de l'entrée du réacteur 105, un moyen 160 de refroidissement du mélange à une température supérieure à la température de rosée du mélange et inférieure à la température opératoire du réacteur.

Dans des modes de réalisation préférentiels, tels que celui représenté en figure 1, le moyen 160 de refroidissement du mélange refroidit ce mélange à une température comprise entre 150°C et 300°C et de préférence à une température supérieure ou égale à 230°C pour éviter la formation de composés toxiques comme par exemple le tétra-carbonyle de nickel.

Ce moyen de refroidissement 160 est, par exemple, un échangeur thermique pour refroidir le syngas.

De plus, le dispositif 10 peut comporter, dans ces modes de réalisation, un capteur 162 de température du mélange en aval du moyen de refroidissement 160. La température du moyen de refroidissement 160 varie en fonction de la température captée et d'une température-consigne prédéterminée. Si la température captée est supérieure à la température-consigne, la puissance du moyen de refroidissement 160 est augmentée. Inversement, la puissance du moyen de refroidissement 160 est réduite lorsque la température captée est inférieure à la température-consigne.

Dans des modes de réalisation préférentiels, tels que celui représenté en figure 1, le dispositif 10 comporte :
- un capteur 150 d'une température à l'intérieur ou en sortie 120 du réacteur 105 et
- un recirculateur 155, de produits chauds de réactions de méthanation entrés dans la dérivation, commandé en fonction de la température captée.

Le capteur 150 est positionné à l'intérieur ou à l'extérieur du réacteur 105. Ce capteur 150 capte la température du catalyseur formant le lit fluidisé, de l'atmosphère du réacteur 105 et/ou de la paroi du réacteur 105 et/ou de la température de la sortie 120 du réacteur 105.

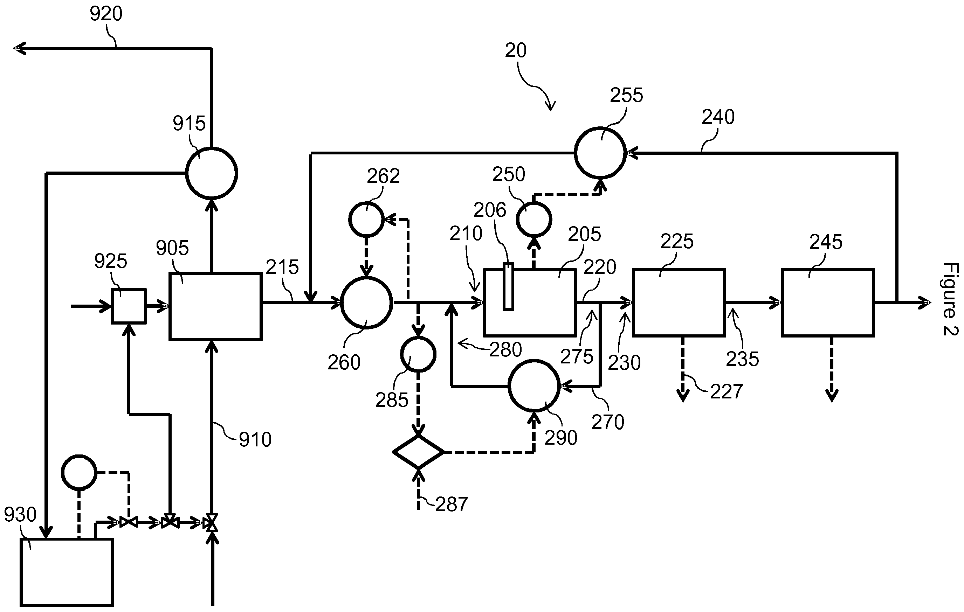

Le recirculateur 155 vise à compenser les pertes de charge, ou de pression, successivement dans :
- le moyen de préchauffage 160, le réacteur 105, le moyen de séparation 125 d'eau particulièrement pour le dispositif 10 décrit en regard de la figure 1 et
- le moyen de préchauffage 260, le réacteur 205, le moyen de séparation 225 d'eau et le moyen de séparation 245 de dioxyde de carbone pour le dispositif 20 décrit en regard de la figure 2
et de l'ensemble des canalisations de connections de ces différents équipements.

Une telle perte de charge est estimée entre 200 et 800 mbar, par exemple. Le recirculateur 155 est, par exemple, un ventilateur, un surpresseur ou un éjecteur. Dans le cas d'un éjecteur, le fluide utilisé pour réaliser le mécanisme d'éjection est, par exemple, de la vapeur d'eau pour permettre la réaction de WGS ayant lieu dans le réacteur 105.

Si la température captée est supérieure à une température prédéterminée, correspondant à des conditions de réaction de méthanation optimales, le débit de produits recirculés est augmenté pour refroidir le milieu réactionnel du réacteur 105. Inversement, si la température captée est inférieure à la température prédéterminée, le débit de produits recirculés est diminué.

Dans des modes de réalisation préférentiels, tels que celui représenté en figure 1, le dispositif 10 comporte une conduite 170 de déviation, d'une partie des produits chauds de réactions de méthanation, comportant :
- une entrée 175 positionnée entre la sortie du réacteur 105 et le moyen 125 de séparation d'eau et
- une sortie180 positionnée en amont de l'entrée 110 du réacteur 105 et en aval du moyen de refroidissement 160.

La conduite de déviation 170 est, par exemple, une conduite étanche. L'entrée 175 est, par exemple, un orifice débouchant sur l'intérieur de la conduite de transport de gaz naturel de synthèse, en amont du moyen de séparation 125 d'eau. La sortie 180 est, par exemple, un orifice d'injection du gaz naturel de synthèse dans le mélange, en aval du moyen de refroidissement 160.

Les gaz naturels de synthèse, chauds, permettent de maintenir constant le débit dans le réacteur 105.

Le débit du syngas est entièrement fonction des quantités d'énergie électriques disponibles. Afin de conserver la stabilité de conversion au cours de l'opération de méthanation, les conditions hydrodynamiques doivent être maintenues les plus constantes possibles. Néanmoins, si la puissance électrique disponible est insuffisante et par conséquent le débit de syngas est réduit, il convient de maintenir un débit global entrant dans le réacteur 105 constant ou d'opter pour une technologie très flexible. Même dans le cas du lit fluidisé capable de fonctionner dans une gamme de débits d'un à six, des débits trop faibles peuvent engendrer une dégradation du refroidissement et donc de la conversion. Pour pallier cette difficulté, en cas de baisse importante de débit de syngas, le flux en sortie de moyen de refroidissement 160 est complété par une recirculation chaude provenant directement de la sortie 120 du réacteur 105 par le biais de la conduite de déviation 170. Le fait d'utiliser un fluide de recirculation chaud ne provoque pas de déséquilibre thermique du réacteur 105 mais permet de rendre le dispositif 10 très flexible.

Dans des modes de réalisation préférentiels, tels que celui représenté en figure 1, le dispositif 10 comporte :
- un moyen de mesure 185 du débit du syngas en aval du lieu du mélange et en amont du réacteur 105 et
- un recirculateur 190, du gaz naturel entré dans la conduite 170 de déviation, commandé en fonction du débit mesuré.

Le moyen de mesure 185 du débit peut être de tout type connu de l'homme du métier qui soit adapté à mesurer le débit de gaz, tel un anémomètre, un débitmètre à effet Coriolis, un débitmètre à effet vortex ou un débitmètre électromagnétique par exemple.

Le recirculateur 190 est similaire au recirculateur 155 en termes structurels. La commande de ce recirculateur 190 est réalisée en fonction du débit mesuré par le moyen de mesure 185 du débit et d'une valeur de débit-consigne 187. Si le débit mesuré est inférieur à un débit-consigne 187 prédéterminé, le recirculateur 190 est actionné de manière à combler la différence entre le débit mesuré et le débit-consigne 187 par un débit équivalent de gaz naturel de synthèse.

Dans des modes de réalisation préférentiels, le dispositif 10 comporte un moyen de séparation 145 de dioxyde de carbone du gaz naturel de synthèse positionné en aval de la dérivation 140. La mise en oeuvre du dispositif 10, soit l'objet de la présente invention, permet d'obtenir du gaz de synthèse proche des spécifications du réseau gazier nécessitant peu d'opérations supplémentaires.

De plus, le dispositif 10 peut ainsi être mis en oeuvre pour un domaine de pression compris entre 1 bar et 100 bars et un domaine de températures prédéterminées compris entre 230°C et 700°C.

On observe, sur la figure 2, qui n'est pas à l'échelle, une vue schématique d'un deuxième mode de réalisation du dispositif 20 objet de la présente invention. Ce dispositif 20 de production de gaz de synthèse est similaire au dispositif 10 décrit en regard de la figure 1. Ainsi, les références 205, 210, 215, 220, 225, 227, 230, 235, 240, 250, 255, 260, 262, 270, 275, 280, 285, 287, 290, 905, 910, 915, 920, 925 et 930 du dispositif 20 correspondent respectivement aux références 105, 110, 115, 120, 125, 127, 130, 135, 140, 150, 155, 160, 162, 170, 175, 180, 185, 187, 190, 805, 810, 815, 820, 825 et 830 du dispositif 10.

Le dispositif 20 comporte, de plus, un moyen de séparation 245 de dioxyde de carbone du gaz naturel de synthèse positionné en amont de la dérivation 240. Ce moyen de séparation 245 peut être positionné en amont ou en aval du moyen de séparation 225 d'eau.

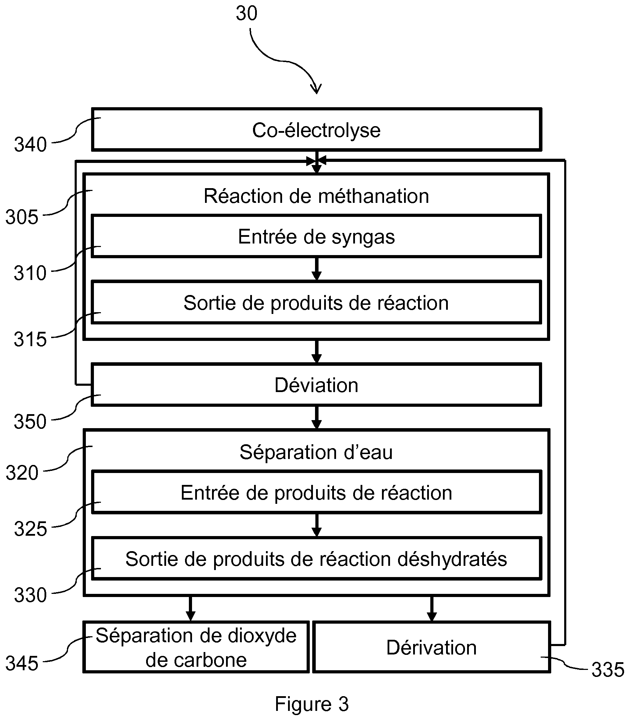

On observe, sur la figure 3, sous forme d'un logigramme d'étapes, un mode de réalisation particulier du procédé 30 objet de la présente invention. Ce procédé 30 de production de naturel gaz de synthèse comporte :
- une étape 340 de co-électrolyse à haute température d'un mélange de dioxyde de carbone et d'eau pour produire un syngas comportant du monoxyde de carbone, du dioxyde de carbone, de l'eau et du dihydrogène,
- une étape 305 de réaction de méthanation comportant :
   - une étape d'entrée 310 dans un réacteur isotherme de méthanation, du syngas issu de l'étape 340 de co-électrolyse, par une conduite d'alimentation de syngas et
   - une étape 315 de sortie pour gaz naturel de synthèse,
- une étape 320 de séparation d'eau comportant :
   - une étape 325 d'entrée pour gaz naturel de synthèse et
   - une étape 330 de sortie pour gaz naturel de synthèse déshydraté,
- une étape 335 de dérivation d'une partie du gaz naturel de synthèse déshydraté en sortie de l'étape de sortie de l'étape de séparation d'eau vers la conduite d'alimentation de syngas pour qu'un mélange, du syngas et du gaz naturel de synthèse dérivé, soit fourni au réacteur,
- préférentiellement, une étape 345 de séparation du dioxyde de carbone contenu dans le gaz naturel de synthèse déshydraté, cet étape 345 de séparation pouvant être réalisée entre l'étape 305 de réaction et l'étape de séparation 320 d'eau ou en aval de l'étape 320 de séparation d'eau et
- préférentiellement, une étape 350 de déviation d'une partie des produits chauds de réactions de méthanation vers l'amont de l'étape de méthanation.

Ce procédé 30 est mis en oeuvre, par exemple, par un dispositif 10 ou 20 objet de la présente invention et décrit en regard des figures 1 et 2.

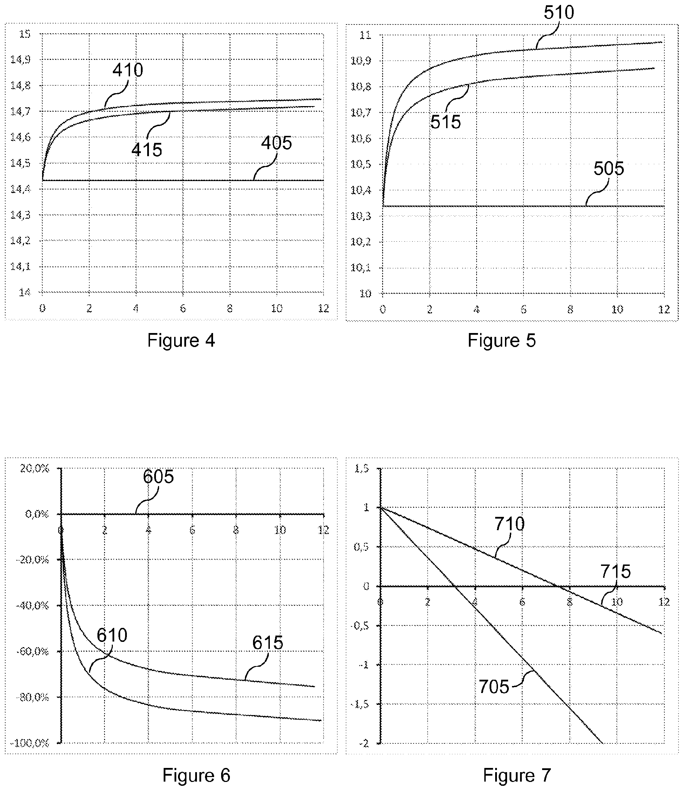

On note que les figures 4 à 7 sont le résultat de simulations réalisées pour déterminer l'impact du dispositif et du procédé objet de la présente invention. Ces résultats sont comparés à une simulation d'un cas de recirculation sans déshydratation. L'objectif du dispositif et du procédé objets de la présente invention est également de minimiser les étapes de mise aux spécifications tout en opérant une méthanation mono-étagée à pression modérée et acceptable en terme de coûts. Pour ces mêmes raisons, le SNG est préférentiellement comprimé en fin de chaîne de production après les séparations requises pour l'injection sur le réseau. Les simulations réalisées et présentées ci-après ont été réalisées à 8 bars et une température de méthanation de 320°C.

Les figures 4 et 5 représentent respectivement l'indice de Wobbe et le PCS du SNG avant la séparation de H₂ pour la configuration de référence avec recirculation du SNG humide, la recirculation du SNG déshydraté et la recirculation du SNG déshydraté et décarbonaté.

Ces résultats sont présentés en fonction du taux de recirculation qui correspond au rapport des débits volumiques aux conditions normales de pression et de température du flux recirculé et du flux de syngas. Pour la « configuration de référence », le flux recirculé est remplacé par un débit de SNG humide équivalent au flux traversant la conduite de déviation.

On observe, sur la figure 4, en ordonnée, l'indice de Wobbe du gaz naturel de synthèse produit par le dispositif, 10 ou 20, en fonction du taux de recirculation, en abscisse, et de la nature du gaz naturel de synthèse recirculé en entrée du réacteur, 105 ou 205, de méthanation.

On observe, notamment, que la recirculation de gaz naturel de synthèse humide 405 n'a pas d'effet sur l'indice de Wobbe du gaz naturel de synthèse produit par le dispositif.

On observe, enfin, que la recirculation de gaz naturel de synthèse déshydraté et décarbonaté 415 améliore l'indice de Wobbe du gaz naturel de synthèse produit par le dispositif, et ce même avec un taux de recirculation inférieur à un.

On observe, de plus, que la recirculation de gaz naturel de synthèse déshydraté 410 améliore d'avantage l'indice de Wobbe du gaz naturel de synthèse produit par le dispositif.

On observe, sur la figure 5, en ordonnée, le PCS du gaz naturel de synthèse produit par le dispositif, 10 ou 20, en fonction du taux de recirculation, en abscisse, et de la nature du gaz naturel de synthèse recirculé en entrée du réacteur, 105 ou 205, de méthanation.

On observe, notamment, que la recirculation de gaz naturel de synthèse humide 505 n'a pas d'effet sur le PCS du gaz naturel de synthèse produit par le dispositif.

On observe, enfin, que la recirculation de gaz naturel de synthèse déshydraté et décarbonaté 515 améliore le PCS du gaz naturel de synthèse produit par le dispositif, et ce même avec un taux de recirculation inférieur à un.

On observe, de plus, que la recirculation de gaz naturel de synthèse déshydraté 510 améliore d'avantage le PCS du gaz naturel de synthèse produit par le dispositif.

D'après les résultats obtenus en terme d'indice de Wobbe et de PCS, le taux de recirculation du gaz humide, c'est à dire la configuration de référence, n'a aucune incidence sur la qualité du gaz et montre que la séparation du H₂ est indispensable pour atteindre les spécifications d'injection. La recirculation après déshydratation simple ou avec décarbonatation conduit à une augmentation plus ou moins importante de l'indice de Wobbe et du PCS. Ces améliorations pourraient être interprétées comme étant le résultat d'une simple dilution mais la figure 6 met en exergue une réelle amélioration des équilibres réactionnels avec une baisse drastique du flux molaire de H₂ en sortie de dispositif 10 ou 20.

On observe, sur la figure 6, en ordonnée, le flux molaire relatif de H₂ en sortie du dispositif, 10 ou 20, en fonction du taux de recirculation, en abscisse, et de la nature du gaz naturel de synthèse recirculé en entrée du réacteur, 105 ou 205, de méthanation par rapport à un dispositif à recirculation de gaz naturel de synthèse humide ou sans recirculation.

On observe, notamment, que la recirculation de gaz naturel de synthèse humide 605 n'a pas d'effet sur le flux molaire de H₂ en sortie du dispositif.

On observe, de plus, que la recirculation de gaz naturel de synthèse déshydraté 610 provoque une réduction du flux molaire de H₂ en sortie du dispositif.

On observe, enfin, que la recirculation de gaz naturel de synthèse déshydraté et décarbonaté 615 provoque également une réduction du flux molaire de H₂ en sortie du dispositif.

Malgré la dilution par recirculation, le ratio CO/H₂O après recirculation est conservé en entrée de réacteur par rapport au ratio CO/H₂O initial sans recirculation. Ainsi, le risque lié à une désactivation du catalyseur de méthanation par cokage reste relativement faible. Entre les deux dispositifs, 10 et 20, la décarbonatation en aval de la recirculation du gaz naturel de synthèse paraît d'avantage efficace en termes de réduction molaire du H₂. Ainsi, pour respecter les critères d'injectabilité, un débit de recirculation deux à trois fois plus faible est requis en déshydratation simple comparativement à la solution avec décarbonatation. Pour les conditions opératoires retenues pour la simulation, et lorsque seule la déshydratation est mise en oeuvre avant la recirculation, le taux minimum de recirculation nécessaire pour éviter la séparation de H₂ est estimé à 0.4. Lorsque la déshydratation est complétée par une étape de décarbonatation, le taux requis est de l'ordre de 1. Ces taux respectifs permettent effectivement de répondre aux contraintes liées à l'injection mais requièrent toutefois un système interne de refroidissement du réacteur pour conserver l'isothermicité et ne peuvent dans ce cas pas s'appliquer aux technologies à lits fixes non refroidies. Pour ce qui concerne les réacteurs échangeurs, le réacteur à eau bouillante ou à lit fluidisé, cette nouveauté, dans ces conditions d'exploitation, permet de réduire la surface d'échangeur de respectivement 15 % et 5 %.

La figure 7 permet de visualiser l'évolution de l'exothermicité normalisée du réacteur, c'est à dire la chaleur à évacuer par rapport à un cas sans recirculation, en fonction du taux de recirculation pour la configuration de référence et les deux dispositifs, 10 et 20, décrits ci-dessus.

On observe, sur la figure 7, en ordonnée, l'exothermicité du réacteur de méthanation du dispositif, 10 ou 20, en fonction du taux de recirculation, en abscisse, et de la nature du gaz naturel de synthèse recirculé en entrée du réacteur, 105 ou 205, de méthanation.

On observe, notamment, que la recirculation de gaz naturel de synthèse humide 705 réduit l'exothermicité du réacteur de méthanation.

On observe, de plus, que la recirculation de gaz naturel de synthèse déshydraté 710 réduit également l'exothermicité du réacteur de méthanation.

On observe, enfin, que la recirculation de gaz naturel de synthèse déshydraté et décarbonaté 715 réduit également l'exothermicité du réacteur de méthanation.

Il apparaît que l'augmentation du taux de recirculation entraîne une baisse linéaire de l'exothermicité du réacteur. Ici, le SNG recirculé joue le rôle de volant thermique qui est plus marqué en présence de H₂O du fait d'une capacité calorifique plus importante. Le fait d'atteindre un niveau de recirculation correspondant à une température idéale de fonctionnement des dispositifs, 10 et 20, permet de s'affranchir de l'échangeur interne du réacteur et de la séparation de H₂ de mise aux spécifications. Au-delà, le réacteur est allothermique et nécessite donc un appoint de chaleur pour entretenir les réactions.

Les fractions molaires des espèces H₂, CO₂, CO et CH₄ en fonction du taux de recirculation pour les différentes configurations simulées évoluent dans le sens de l'amélioration de la qualité du SNG. Toutefois, la fraction molaire de CO augmente avec le dispositif 10 de recirculation du SNG déshydraté. Pour les conditions opératoires considérées, la valeur consigne n'est cependant jamais dépassée. Dans ce cas, la déshydratation simple conduit à concentrer la teneur en CO₂ en entrée de réacteur et déplace l'équilibre de la réaction WGS vers la production de CO et la consommation de H₂. Pour le dispositif 20, l'extraction de CO₂ intégrée dans la boucle de recirculation permet de favoriser la réaction de WGS vers la production de H₂ qui est ensuite converti en CH₄.

## Revendications

1. Dispositif (10, 20) de production de gaz naturel de synthèse, **caractérisé en ce qu'**il comporte :
- un moyen (805, 905) de co-électrolyse à haute température d'un mélange de dioxyde de carbone et d'eau pour produire un syngas comportant du monoxyde de carbone, du dioxyde de carbone, de l'eau et du dihydrogène,
- un réacteur (105, 205) isotherme de méthanation comportant :
- une entrée (110, 210), pour le syngas produit par le moyen de co-électrolyse, reliée à une conduite (115, 215) d'alimentation de syngas et
- une sortie (120, 220) pour gaz naturel de synthèse,
- un moyen (125, 225) de séparation d'eau comportant :
- une entrée (130, 230) pour gaz naturel de synthèse reliée à la sortie pour gaz naturel de synthèse et
- une sortie (135, 235) pour gaz naturel de synthèse déshydraté,
- une dérivation (140, 240) d'une partie du gaz naturel de synthèse déshydraté depuis la sortie du moyen de séparation d'eau vers la conduite d'alimentation de syngas pour qu'un mélange, du syngas et du gaz naturel de synthèse dérivés, soit fourni au réacteur.

2. Dispositif (10) selon la revendication 1, qui comporte un moyen (145) de séparation de dioxyde de carbone du gaz naturel de synthèse, ce moyen de séparation étant positionné en aval de la dérivation (140).

3. Dispositif (20) selon l'une des revendications 1 ou 2, qui comporte un moyen (245) de séparation de dioxyde de carbone du gaz naturel de synthèse, ce moyen de séparation étant positionné en amont de la dérivation (240).

4. Dispositif (10, 20) selon l'une des revendications 1 à 3, qui comporte un moyen (825, 925) de compression, du dioxyde de carbone destiné à être mélangé à l'eau.

5. Dispositif (10, 20) selon l'une des revendications 1 à 4, qui comporte, en amont de l'entrée du réacteur (105, 205), un moyen (160, 260) de refroidissement du mélange à une température supérieure à la température de rosée du mélange pour éviter toute pré-condensation de l'eau du mélange et inférieure à la température opératoire du réacteur pour permettre le refroidissement du réacteur (105, 205).

6. Dispositif (10, 20) selon la revendication 5, dans lequel le moyen (160, 260) de refroidissement du mélange refroidit ce mélange à une température comprise entre 150°C et 300°C.

7. Dispositif (10, 20) selon la revendication 6, dans lequel le moyen (160, 260) de refroidissement du mélange refroidit ce mélange à une température supérieure à 230°C et inférieure à la température de fonctionnement du réacteur (105, 205).

8. Dispositif (10, 20) selon la revendication 7, qui comporte une conduite (170, 270) de déviation, d'une partie des produits chauds de réactions de méthanation, comportant :
- une entrée (175, 275) positionnée entre la sortie du réacteur (105, 205) et le moyen (125, 225) de séparation d'eau et
- une sortie (180, 280) positionnée en amont de l'entrée du réacteur et en aval du moyen (160, 260) de refroidissement.

9. Dispositif (10, 20) selon l'une des revendications 1 à 8, qui comporte :
- un capteur (150, 250) d'une température à l'intérieur ou en sortie du réacteur (105, 205) et
- un recirculateur (155, 255), de produits chauds de réactions de méthanation entrés dans la dérivation (140, 240), commandé en fonction d'une valeur de la température captée.

10. Dispositif (10, 20) selon la revendication 9, qui comporte :
- un moyen de mesure (185, 285) du débit du syngas en aval du lieu du mélange et en amont du réacteur de méthanation (105, 205) et
- un recirculateur (190, 290), du gaz naturel entré dans la conduite (170, 270) de déviation, commandé en fonction du débit de syngas mesuré.

11. Dispositif (10, 20) selon l'une des revendications 1 à 10, qui comporte :
- un moyen (810, 910) d'injection d'un gaz de balayage pour balayer une anode du moyen (805, 905) de co-électrolyse et
- un moyen (815, 915) de séparation d'eau de produits de la co-électrolyse,
- un moyen (820, 920) de récupération de dioxygène ou d'air enrichi en dioxygène en sortie du moyen de séparation.

12. Dispositif (10, 20) selon l'une des revendications 1 à 11, dans lequel le moyen (125, 225) de séparation est configuré pour refroidir les gaz naturels de synthèse à une température comprise entre -5°C et +60°C.

13. Dispositif (10, 20) selon l'une des revendications 1 à 12, dans lequel le moyen de séparation (125, 225) d'eau est configuré pour refroidir les gaz naturels de synthèse à une température inférieure à la température de rosée aux conditions de fonctionnement du réacteur.

14. Dispositif (10, 20) selon l'une des revendications 1 à 13, dans lequel le réacteur (105) isotherme est un réacteur à lit fluidisé.

15. Procédé (30) de production de gaz naturel de synthèse, **caractérisé en ce qu'**il comporte :
- une étape (340) de co-électrolyse à haute température d'un mélange de dioxyde de carbone et d'eau pour produire un syngas comportant du monoxyde de carbone, du dioxyde de carbone, de l'eau et du dihydrogène,
- une étape (305) de réaction de méthanation comportant :
- une étape d'entrée (310) dans un réacteur isotherme de méthanation, du syngas issu de l'étape de co-électrolyse, par une conduite d'alimentation de syngas et
- une étape (315) de sortie pour gaz naturel de synthèse,
- une étape (320) de séparation d'eau comportant :
- une étape (325) d'entrée pour gaz naturel de synthèse reliée à la sortie pour gaz naturel de synthèse et
- une étape (330) de sortie pour gaz naturel de synthèse déshydraté et
- une étape (335) de dérivation d'une partie du gaz naturel de synthèse déshydraté en sortie de l'étape de séparation d'eau vers la conduite d'alimentation de syngas pour qu'un mélange, du syngas et du gaz naturel de synthèse dérivés, soit fourni au réacteur.

## Patentansprüche

1. Vorrichtung (10, 20) zum Erzeugen von Synthese-Erdgas, **dadurch gekennzeichnet, dass** sie umfasst:
- ein Mittel (805, 905) zur Co-Elektrolyse bei hoher Temperatur einer Mischung aus Kohlendioxid und Wasser zum Erzeugen eines Synthesegases, umfassend Kohlenmonoxid, Kohlendioxid, Wasser und Dihydrogn,
- einen Isotherm-Reaktor zur Methanerzeugung (105, 205), umfassend:
- einen Eingang (110, 210) für das Synthesegas, das durch das Co-Elektrolysemittel von kohlenwasserstoffhaltigem Material produziert ist, das an eine Versorgungsleitung (115, 215) für Synthesegas angeschlossen ist, und
- einen Ausgang (120, 220) für Synthese-Erdgas,
- ein Abscheidemittel (125, 225) für Wasser, umfassend:
- einen Eingang (130, 230) für Synthese-Erdgas, der an den Ausgang für Synthese-Erdgas angeschlossen ist, und
- einen Ausgang (135, 235) für entwässertes Synthese-Erdgas,
- eine Ableitung (140, 240) eines Teils des entwässerten Synthese-Erdgases ab dem Ausgang des Abscheidemittels für Wasser zu der Versorgungsleitung für Synthesegas, damit dem Reaktor eine Mischung aus abgeleitetem Synthesegas und abgeleitetem Synthese-Erdgas geliefert wird.

2. Vorrichtung (10) gemäß Anspruch 1, die ein Abscheidemittel (145) für Kohlendioxid aus dem Synthese-Erdgas umfasst, wobei dieses Abscheidemittel nach der Ableitung (140) angeordnet ist.

3. Vorrichtung (20) gemäß einem der Ansprüche 1 oder 2, das ein Abscheidemittel (245) für Kohlendioxid aus dem Synthese-Erdgas umfasst, wobei dieses Abscheidemittel vor der Ableitung (240) angeordnet ist.

4. Vorrichtung (10, 20) gemäß einem der Ansprüche 1 bis 3, das ein Komprimierungsmittel (825, 925) des Kohlendioxids umfasst, das zum Vermischen mit dem Wasser bestimmt ist.

5. Vorrichtung (10, 20) gemäß einem der Ansprüche 1 bis 4, das vor dem Eingang des Reaktors (105, 205) ein Mittel (160, 260) zum Abkühlen der Mischung auf eine höhere Temperatur als die Taupunkttemperatur der Mischung, um jegliche Vor-Kondensation des Wassers und der Mischung zu vermeiden, und auf eine niedrigere Temperatur als die Betriebstemperatur des Reaktors, um das Abkühlen des Reaktors (105, 205) zu erlauben, umfasst.

6. Vorrichtung (10, 20) gemäß Anspruch 5, bei der das Mittel (160, 260) zum Abkühlen der Mischung diese Mischung auf eine zwischen 150° C und 300° C inbegriffene Temperatur abkühlt.

7. Vorrichtung (10, 20) gemäß Anspruch 6, bei der das Mittel (160, 260) zum Abkühlen der Mischung diese Mischung auf eine Temperatur abkühlt, die höher ist als 230° C und niedriger als die Betriebstemperatur des Reaktors (105, 205).

8. Vorrichtung (10, 20) gemäß Anspruch 7, die eine Ableitungsleitung (170, 270) eines Teils der heißen Produkte aus Methanerzeugungsreaktionen umfasst, umfassend:
- einen Eingang (175, 275), der zwischen dem Ausgang des Reaktors (105, 205) und dem Abscheidemittel (125, 225) für Wasser angeordnet ist, und
- einen Ausgang (180, 280), der vor dem Eingang des Reaktors und nach dem Mittel (160, 260) zum Abkühlen angeordnet ist.

9. Vorrichtung (10, 20) gemäß einem der Ansprüche 1 bis 8, das umfasst:
- einen Temperatursensor (150, 250) im Innern oder am Ausgang des Reaktors (105, 205) und
- einen Rücklauf (155, 255) von heißen Produkten aus Methanerzeugungsreaktionen, die in die Ableitung (140, 240) eingetreten sind, der in Abhängigkeit von der erfassten Temperatur gesteuert ist.

10. Vorrichtung (10, 20) gemäß Anspruch 9, die umfasst:
- ein Messmittel (185, 285) des Durchsatzes des Synthesegases nach dem Ort der Mischung und vor dem Methanerzeugungsreaktor (105, 205) und
- einen Rücklauf (190, 290) des in die Ableitungsleitung (170, 270) eingeführten Erdgases, der in Abhängigkeit von dem gemessenen Durchsatz des Synthesegases gesteuert ist.

11. Vorrichtung (10, 20) gemäß einem der Ansprüche 1 bis 10, das umfasst:
- ein Mittel (810, 910) zum Einschießen eines Spülgases zum Spülen einer Anode des Mittels (805, 905) zur Co-Elektrolyse und
- ein Abscheidemittel (815, 915) für Wasser von Produkten der Co-Elektrolyse,
- ein Mittel (820, 920) zum Auffangen von Disauerstoff oder mit Disauerstoff angereicherter Luft am Ausgang des Abscheidemittels.

12. Vorrichtung (10, 20) gemäß einem der Ansprüche 1 bis 11, bei der das Abscheidemittel (125, 225) zum Abkühlen der Synthese-Erdgase auf eine zwischen -5° C und +60° C inbegriffene Temperatur ausgestaltet ist.

13. Vorrichtung (10, 20) gemäß einem der Ansprüche 1 bis 12, bei der das Abscheidemittel (125, 225) für Wasser zum Abkühlen der Synthese-Erdgase auf eine Temperatur ausgestaltet ist, die unter der Taupunkttemperatur bei den Betriebsbedingungen des Reaktors liegt.

14. Vorrichtung (10, 20) gemäß einem der Ansprüche 1 bis 13, bei der der Isotherm-Reaktor ein Wirbelbett-Reaktor ist.

15. Vorrichtung (30) zum Erzeugen von Synthese-Erdgas, **dadurch gekennzeichnet, dass** sie umfasst:
- einen Schritt (340) zur Co-Elektrolyse bei hoher Temperatur einer Mischung aus Kohlendioxid und Wasser zum Erzeugen eines Synthesegases, umfassend Kohlenmonoxid, Kohlendioxid, Wasser und Dihydrogn,
- einen Reaktionsschritt zur Methanerzeugung (305), umfassend:
- einen Eingangsschritt (305) in einen Isotherm-Reaktor zur Methanerzeugung von Synthesegas, das aus dem Schritt der Co-Elektrolyse stammt, durch eine Versorgungsleitung für Synthesegas und
- einen Ausgangsschritt (315) für Synthese-Erdgas,
- einen Abscheideschritt für Wasser, umfassend:
- einen Eingangsschritt (325) für Synthese-Erdgas, der an den Ausgang für Synthese-Erdgas angeschlossen ist, und
- einen Ausgangsschritt (330) für entwässertes Synthese-Erdgas und
- einen Ableitungsschritt (335) eines Teils des entwässerten Synthese-Erdgases am Ausgang des Abscheideschritts für Wasser zu der Versorgungsleitung für Synthesegas, damit dem Reaktor eine Mischung aus abgeleitetem Synthesegas und abgeleitetem Synthese-Erdgas geliefert wird.

## Claims

1. Synthetic natural gas production device (10, 20), **characterized in that** it comprises:
- a means (805, 905) for performing high-temperature co-electrolysis of a carbon dioxide and water mixture in order to produce a syngas comprising carbon monoxide, carbon dioxide, water, and hydrogen;
- an isothermal methanation reactor (105, 205) comprising:
- an inlet (110, 210), for syngas produced by the co-electrolysis means, connected to a syngas supply channel (115, 215), and
- an outlet (120, 220) for synthetic natural gas;
- a water separation means (125, 225) comprising:
- an inlet (130, 230) for synthetic natural gas connected to the synthetic natural gas outlet, and
- an outlet (135, 235) for dehydrated synthetic natural gas;
- a bypass (140, 240) for a portion of the dehydrated synthetic natural gas from the outlet of the water separation means to the syngas supply channel in order to provide a mixture of the bypassed syngas and synthetic natural gas to the reactor.

2. Device (10) according to claim 1, which comprises a means (145) for separating carbon dioxide from the synthetic natural gas, said separation means being positioned downstream from the bypass (140).

3. Device (20) according to one of claims 1 or 2, which comprises a means (245) for separating carbon dioxide from the synthetic natural gas, said separation means being positioned upstream from the bypass (240).

4. Device (10, 20) according to one of claims 1 to 3, which comprises a means (825, 925) for compressing carbon dioxide intended to be mixed with the water.

5. Device (10, 20) according to one of claims 1 to 4, which comprises, upstream from the inlet of the reactor (105, 205), a means (160, 260) for cooling the mixture to a temperature above the dew point temperature of the mixture, to prevent any pre-condensation of the water of the mixture, and below the operating temperature of the reactor, to allow the reactor (105, 205) to be cooled.

6. Device (10, 20) according to claim 5, wherein the mixture cooling means (160, 260) cools this mixture to a temperature between 150°C and 300°C.

7. Device (10, 20) according to claim 6, wherein the mixture cooling means (160, 260) cools this mixture to a temperature above 230°C and below the operating temperature of the reactor (105, 205).

8. Device (10, 20) according to claim 7, which comprises a bypass channel (170, 270), for a portion of the hot methanation reaction products, comprising:
- an inlet (175, 275) positioned between the outlet from the reactor (105, 205) and the water separation means (125, 225); and
- an outlet (180, 280) positioned upstream from the inlet to the reactor and downstream from the cooling means (160, 260).

9. Device (10, 20) according to one of claims 1 to 8, which comprises:
- a sensor (150, 250) of a temperature inside or on exiting the reactor (105, 205); and
- a recirculator (155, 255) of hot methanation reaction products input into the bypass channel (140, 240), controlled as a function of the sensed temperature.

10. Device (10, 20) according to claim 9, which comprises:
- a means (185, 285) for measuring the flow rate of the syngas downstream from the mixing location and upstream from the methanation reactor (105, 205); and
- a recirculator (190, 290) of the natural gas input into the bypass channel (170, 270), controlled as a function of the syngas flow rate measured.

11. Device (10, 20) according to one of claims 1 to 10, which comprises:
- a means (810, 910) for injecting a purge gas for cleaning an anode of the co-electrolysis means (805, 905); and
- a means (815, 915) for separating water from co-electrolysis products;
- a means (820, 920) for recovering oxygen or oxygen-enriched air on output from the separation means.

12. Device (10, 20) according to one of claims 1 to 11, wherein the separation means (125, 225) is configured to cool the synthetic natural gases to a temperature between -5°C and +60°C.

13. Device (10, 20) according to one of claims 1 to 12, wherein the water separation means (125, 225) is configured to cool the synthetic natural gases to a temperature below the dew point temperature at the operating conditions of the reactor.

14. Device (10, 20) according to one of claims 1 to 13, wherein the isothermal reactor (105) is a fluidized-bed reactor.

15. Method (30) for producing synthetic natural gas, **characterized in that** it comprises:
- a means (340) for performing high-temperature co-electrolysis of a carbon dioxide and water mixture in order to produce a syngas comprising carbon monoxide, carbon dioxide, water, and hydrogen;
- a methanation reaction step (305), comprising:
- a step (310) of inputting syngas, output from the co-electrolysis step, into an isothermal methanation reactor by means of a syngas supply channel, and
- a step (315) of outputting synthetic natural gas;
- a step (320) of separating water, comprising:
- a step (325) of inputting synthetic natural gas connected to the synthetic natural gas outlet, and
- a step (330) of outputting dehydrated synthetic natural gas; and
- a step (335) of bypassing a portion of the dehydrated synthetic natural gas output from the water separation step to the syngas supply channel in order to provide a mixture of the syngas and the bypassed synthetic natural gas to the reactor.
